# DEMANDE DE BREVET EUROPEEN

(11) **EP 0 541 433 A1**
(43) Date de publication de la demande: **12.05.1993**
(21) Numéro de dépôt: 92402968.9
(22) Date de dépôt: 03.11.1992
(51) Int. Cl.: B60N 2/44

(54) **Vérin de positionnement à crémaillère et à grains dentés**

(30) Priorité: 06.11.1991 FR 9113691
(71) Demandeur: BERTRAND FAURE AUTOMOBILE "B.F.A.", F-91300 Massy (FR)
(72) Inventeur: Droulon, Georges, F-61100 Flers (FR)
(74) Mandataire: Madeuf, Claude Alexandre Jean

(57) **Abrégé**

Vérin de positionnement à crémaillère et à grains dentés pour le déplacement rectiligne dans lequel les grains (19, 20) en forme de V présentent sur leur face supérieure des dents coopérant avec la crémaillère (2) portée par la tige (1), ces grains en forme de V coulissant à l'intérieur d'un boîtier (10) de forme appropriée étant repoussés par une came (23) soumise à l'action d'un ressort spiral (25) dont l'une des extrémités (25b) est fixée sur l'axe (22) de la came (23) tandis que l'autre extrémité est fixée sur un support (26) du boîtier (10).

## Description

On connait déjà]à des vérins de positionnement plus spécialement utilisés dans le réglage des sièges d'automobiles et véhicules analogues.

Ces vérins connus (voir en particulier le FR-A-2 652 129) sont constitués par un carter contenant une came qui agit sur des grains coulissants en forme de V renversé coopérant avec des galets dentés venant se bloquer sur l'une des surfaces d'une tige lisse terminée à l'une de ses extrémités par une tête aplatie.

Mais ce dispositif est relativement coûteux de par la réalisation des galets ainsi que leur mise en place, de ces faits il n'est utilisé que pour des véhicules de haut de gamme.

Pour les véhicules utilitaires ou de gamme moyenne où l'on est tenu de réduire les coûts, il est apparu nécessaire d'étudier et de créer un dispositif plus simple qui a abouti à ce nouveau matériel cranté.

La présente invention remédie à ce coût important en créant un vérin de positionnement dont la tige comporte une crémaillère destinée à coopérer avec des grains dentés si bien que, lorsque l'ensemble est bloqué, les dents des grains dentés et les dents de la crémaillère assurent un blocage parfait sans risque de glissement, ce d'autant plus que la came de commande permet un verrouillage des grains puisque ce dispositif est soumis en permanence à l'action d'un ressort de rappel puissant.

Conformément à l'invention, le vérin de positionnement à crémaillère et à grains dentés pour le déplacement rectiligne comprenant au moins une tige normalement bloquée par des grains coopérant avec une came tendant, sous l'action d'un ressort, à repousser ces grains contre la tige, est caractérisé en ce que les grains en forme de V présentent sur leur face supérieure des dents coopérant avec la crémaillère portée par la tige, ces grains en forme de V coulissant à l'intérieur d'un boîtier de forme appropriée étant repoussés par une came soumise à l'action d'un ressort spiral dont l'une des extrémités est fixée sur l'axe de la came tandis que l'autre extrémité est fixée sur un support du boîtier.

Diverses autres caractéristiques ressortent d'ailleurs de la description détaillée qui suit.

Une forme de réalisation de l'objet]et de l'invention est représentée, à titre d'exemple non limitatif, aux dessins annexés.

La fig. 1 montre schématiquement un vérin conforme à l'invention monté entre une assise et un dossier de siège pour le réglage en inclinaison du dossier.

La fig. 2 est une élévation de face du vérin.

La fig. 3 est une élévation latérale d'une légère variante du dispositif de blocage des grains du vérin.

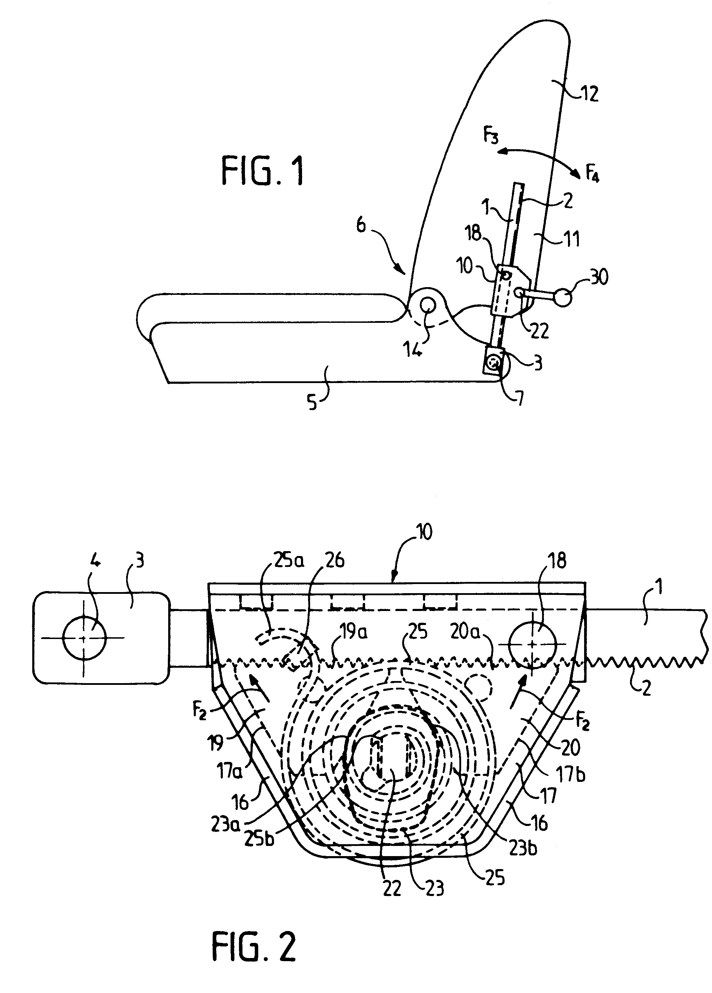

Comme on peut s'en rendre compte à la fig. 1, la tige de vérin 1 présente, sur sa face inférieure 1a, une crémaillère 2 qui s'étend sur la longueur totale de la partie utilisable de la tige de vérin dont l'extrémité gauche présente une tête aplatie 3 percée d'un trou 4 destiné à la fixation d'un vérin sur l'armature 5 d'un siège 6 (voir fig. 1).

Le trou 4 est destiné à tourner autour d'un axe 7 solidaire de l'armature 5 de l'assise.

Un boîtier 10 de forme appropriée, sensiblement en parallélogramme, est fixé sur la partie inférieure de l'armature 11 du dossier 12 du siège 6.

L'axe d'articulation 14 sert de point de rotation du dossier 12 par rapport à l'assise du siège 6.

Comme on peut s'en rendre compte à la fig. 2, le boîtier 10 est constitué par une coquille extérieure 16 et une coquille intérieure 17 venant s'emboîter l'une dans l'autre pour former le boîtier 10. Ces coquilles sont en général réalisées en acier par emboutissage et détourage.

Ce boîtier est fixé sur l'armature 11 du dossier 12 par un tenon 18, par exemple un élément tubulaire, qui est maintenu sur l'armature 11 par différents moyens tels que soudure, emboutissage ou autres.

La coquille intérieure 17 présente des flancs inclinés 17a, 17b contre lesquels prennent appui des grains 19, 20 en forme de V et dont la face supérieure 19a, 20a est dentée.

Dans le milieu du boîtier 10 est monté un axe 22 sur lequel est fixée une came 23 qui, dans la position normale, repousse par ses flancs 23a, 23b, les grains 19, 20 vers le haut, c'est-à-dire en engageant les dents 19a, 20a dans les dents de la crémaillère 2.

L'axe 22 est relié par tous moyens convenables à une extrémité d'un ressort spiral 25 accroché par son autre extrémité 25a sur un point de fixation 26 solidaire du boîtier 10.

Ainsi, en temps normal, la came 23 montée sur l'axe 22 solidaire de l'extrémité 25b du ressort 25 est dans la position représentée à la fig. 2 et repousse vers le haut (flèche F2) les grains 19, 20 dont les dents pénètrent dans les dents de la crémaillère 2.

On obtient ainsi un blocage parfait de la tige 1 du vérin puisque la force très importante développée par le ressort 22 ne permet pas une descente des grains 19, 20 et que ceux-ci sont pris en trois points considérés par la denture 2, les faces d'appui 17a, 17b et la came en les points 23a, 23b.

Lorsque l'on désire déverouiller le vérin, on fait pivoter l'axe 22 à l'aide de la manette 30 ; donc la came 23 tourne dans le sens contraire des aiguilles d'une montre contre l'action du ressort 25 et, de ce fait, la came libère les grains 19, 20 qui peuvent effectuer une légère descente le long des flancs inclinés 17a, 17b du boîtier 10. Les dents des grains 19, 20 se dégagent des dents de la crémaillère 2 de la tige 1, ce qui permet le coulissement du boîtier 10 le long de la tige 1 pour régler l'inclinaison (voir fig. 1) du dossier 12 soit dans le sens de la flèche F3, soit dans le sens de la flèche F4. En libérant la manette de manoeuvre 30, le ressort 25 rappelle la came 23 dans sa position de blocage, les grains 19, 20 coulissent dans le sens de la flèche F2 et viennent bloquer de nouveau la tige 1 par pénétration de leurs dents par la crémaillère 2.

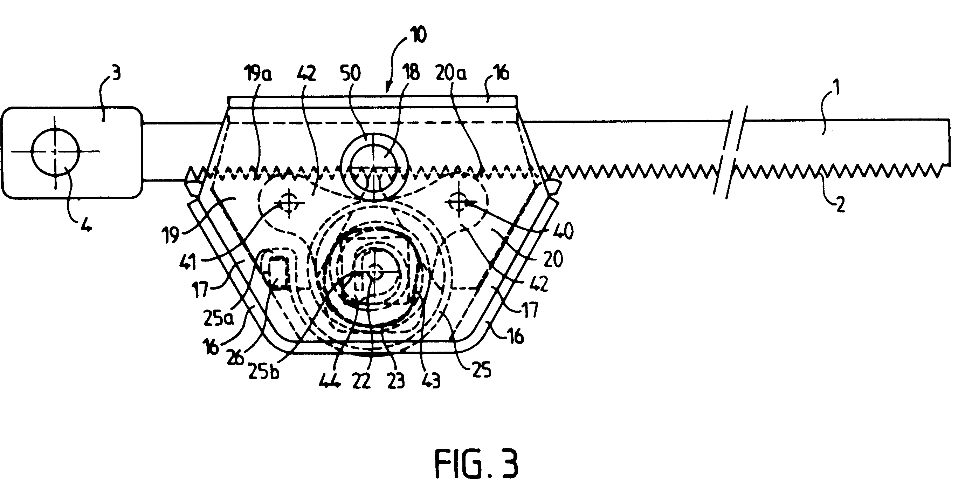

La fig. 3 de la construction est identique et on a donc utilisé les mêmes références mais, dans ce cas, les grains 19, 20 sont reliés par des axes 40, 41 à une pièce 42 en forme de chapeau de gendarme, pièce qui comporte en son centre une ouverture carrée 43 destinée à coopérer avec un ergot 44 solidaire de la came 23 de façon que, lorsqu'à l'aide de la manette 30 on fait pivoter l'axe 22 dans le sens contraire des aiguilles d'une montre, on dégage la came 23 des côtés internes des grains 19, 20 mais, en même temps, on abaisse la pièce 42 en forme de chapeau de gendarme, ce qui provoque le coulissement vers le bas des grains 19, 20 en libérant ainsi positivement la tige 1 portant la crémaillère 2.

Dans ce cas, le boîtier 10 est relié par un tube 50 d'une manière connue en soi à l'armature du dossier 12.

Lorsque le réglage a été effectué comme expliqué ci-dessus en relâchant la manette 30, le ressort spiral 25 rappelle la came 23 dans sa position de blocage et l'ergot 44 en tournant dans le sens des aiguilles d'une montre permet la remontée aisée de la pièce 42 en forme de chapeau de gendarme ramenant ainsi les grains 19, 20 dans leur position de blocage, c'est-à-dire que leurs dents pénètrent de nouveau dans les dents de la crémaillère 2.

Dans certains cas, il est possible de prévoir, pour la tige des vérins 1, une tige carrée que l'on utilise dans sa diagonale, deux des faces de cette tige en diagonale comportant des dentures pour la coopération avec les dentures portées par les grains coulissants 19, 20.

## Revendications

**1 -** Vérin de positionnement à crémaillère et à grains dentés pour le déplacement rectiligne comprenant au moins une tige (1) normalement bloquée par des grains coopérant avec une came tendant, sous l'action d'un ressort, à repousser ces grains contre la tige, caractérisé en ce que les grains (19, 20) en forme de V présentent sur leur face supérieure des dents coopérant avec la crémaillère (2) portée par la tige (1), ces grains en forme de V coulissant à l'intérieur d'un boîtier (10) de forme appropriée étant repoussés par une came (23) soumise à l'action d'un ressort spiral (25) dont l'une des extrémités (25b) est fixée sur l'axe (22) de la came (23) tandis que l'autre extrémité est fixée sur un support (26) du boîtier (10).

**2 -** Vérin suivant la revendication 1, caractérisé en ce que les deux grains en V (19, 20) sont reliés par des axes (40, 41) à une pièce (42) en forme de chapeau de gendarme présentant en son centre une ouverture carrée (43) soumise à l'action d'un ergot (44) solidaire de la came (23) de façon à ce que, lors du déblocage des grains (19, 20) par la came (23), la pièce (42) en chapeau de gendarme soit abaissée par l'ergot (44) en dégageant ainsi les dentures (19a, 20a) des grains (19, 20) de la crémaillère (2) de la tige (1).

**3 -** Vérin de positionnement à crémaillère et à grains dentés sensiblement tel que décrit et représenté aux dessins annexés.
